# FASCICULE DE BREVET EUROPEEN

(11) **EP 1 609 653 B1**
(45) Date de publication et mention de la délivrance du brevet: **25.07.2007**
(21) Numéro de dépôt: 05104698.5
(22) Date de dépôt: 31.05.2005
(51) Int. Cl.: B60J 7/22

(54) **Dispositif coupe-vent pour véhicule automobile, et véhicule automobile correspondant.**
Windschutzanordnung für Fahrzeuge; Fahrzeug mit einer derartigen Windschutzanordnung
Wind baffle for vehicles; vehicle with such a wind baffle

(30) Priorité: 01.06.2004 FR 0405898
(43) Date de publication de la demande: 28.12.2005
(73) Titulaire: WAGON SAS, 79302 Bressuire Cédex (FR)
(72) Inventeur: SEILLER, Julien, 79300, BRESSUIRE (FR)
(74) Mandataire: Bioret, Ludovic

(56) Documents cités:
- EP-A- 0 221 573
- DE-A1- 4 315 139
- DE-A1- 10 134 613
- DE-A1- 10 239 197
- DE-A1- 10 239 200
- DE-A1- 19 714 938
- US-A- 5 024 481
- US-A1- 2002 033 244
- US-B2- 6 582 008

## Description

Le domaine de l'invention est celui des véhicules automobiles de type cabriolet ou similaire, susceptibles d'être utilisés sans pavillon, ou avec un pavillon au moins partiellement retiré. Plus précisément, l'invention concerne les dispositifs coupe-vent pour de tels véhicules, destinés à limiter les turbulences pouvant apparaître à l'intérieur de l'habitacle du véhicule, notamment au niveau des places avant.

On sait qu'il est possible de réduire ces turbulences en mettant en place un élément coupe-vent s'étendant verticalement à l'arrière des places avant du véhicule, au niveau de la partie supérieure des dossiers des sièges avant. On peut encore limiter ces turbulences en déployant également un élément coupe-vent horizontal au-dessus des places arrière, au niveau de la partie supérieure de la carrosserie.

Le document DE 4 315 139 décrit un tel dispositif coupe-vent selon le préambule de la revendication 1.

Plusieurs véhicules cabriolets sont actuellement diffusés avec un tel équipement, qui est généralement amovible et pliable. Il peut s'agir d'une simple toile, éventuellement montée sur un cadre souple.

Ces équipements ont l'avantage d'être relativement simples, mais leur mise en place peut être peu aisée. Ils sont en outre non adaptés à certains véhicules, pour lesquels il est souhaitable que les équipements soient faciles à monter, d'aspect solide et esthétique, et le cas échéant au moins en partie automatisable.

D'autres techniques prévoient des éléments rigides, montés coulissants ou articulés. Ces techniques sont coûteuses, encombrantes et complexes à mettre en oeuvre, notamment pour l'élément horizontal.

Plus généralement, la mise en oeuvre des dispositifs connue est généralement peu ergonomique, en particulier lorsqu'il est nécessaire de déployer d'une part un élément horizontal, et d'autre part un élément vertical.

L'invention a notamment pour objectif de pallier ces différents inconvénients de l'art antérieur.

Plus précisément, un objectif de l'invention est de fournir une technique de coupe-vent pour véhicule automobile de type cabriolet, permettant de façon simple et efficace de déployer et maintenir un élément coupe-vent.

Un autre objectif de l'invention est de fournir une telle technique, qui permettre de mettre en oeuvre, dans certains modes de réalisation, des moyens au moins en partie amovible, et qui soient simples à monter et à démonter, et peu encombrants dans une position pliée.

L'invention a également pour objectif de fournir une telle technique, qui peut être au moins en partie automatisée.

Un autre objectif de l'invention est de fournir une telle technique, qui soit peu coûteuse, et notamment qui présente un bon rapport qualité/prix, par rapport aux techniques connues.

L'invention a encore pour objectif de fournir une telle technique, qui soit facile à mettre en oeuvre par les utilisateurs.

Ces objectifs, ainsi que d'autres qui apparaîtront plus clairement par la suite, sont atteints à l'aide d'un dispositif coupe-vent pour véhicule automobile de type cabriolet, selon la revendication 1.

On dispose ainsi de moyens simples à mettre en oeuvre, et non (ou peu) visibles lorsqu'ils ne sont pas utilisés. Ils sont en outre peu encombrants, donc facilement stockables dans le véhicule.

Avantageusement, ce dispositif comprend également au moins deux montants mobiles et/ou amovibles, solidarisés ou solidarisables au véhicule, s'étendant sensiblement verticalement à l'arrière des sièges avant du véhicule, dans une position de travail, et présentant en leur partie supérieure des moyens de maintien d'au moins une des barres de tirage ou d'au moins un des tubes enrouleurs.

De façon avantageuse, ledit dispositif comprend également au moins un second élément coupe-vent susceptible de recouvrir sensiblement horizontalement une surface s'étendant à l'arrière des sièges avant du véhicule, et formé par au moins une toile montée sur un tube enrouleur.

Dans ce cas, selon un premier mode de réalisation préférentiel de l'invention, le dispositif comprend au moins une première toile montée sur un premier tube enrouleur, formant au moins une partie du premier élément coupe-vent, et au moins une seconde toile montée sur au moins un second tube enrouleur, formant au moins une partie du second élément coupe-vent.

Avantageusement, les premier(s) et second(s) tubes enrouleurs peuvent alors être regroupés dans une même cassette.

De façon avantageuse, les montants sont mobiles de façon à entraîner la ou les barres de tirage de façon à assurer le déploiement de la ou des premières toiles.

De tels montants peuvent notamment appartenir au groupe comprenant :
- des montants télescopiques ;
- des montants articulés ;
- des montants formant compas.

Avantageusement, le déplacement des montants est motorisé.

Selon une caractéristique préférentielle, les montants peuvent se replier sensiblement parallèlement à la cassette.

La cassette est avantageusement amovible.

Selon un mode de réalisation particulier, la cassette contient quatre tubes enrouleurs, et est articulée en son milieu, de façon à réduire son encombrement dans une position pliée.

Selon un second mode de réalisation avantageux de l'invention, le dispositif comprend au moins une toile pouvant être d'une part horizontalement pour former au moins une partie du second élément coupe-vent, et d'autre part verticalement pour former au moins une partie du premier élément coupe-vent.

La ou les toiles peuvent alors avantageusement être montées chacune sur un tube enrouleur solidaire dudit véhicule. Par exemple, la ou les toiles peuvent être logées, en position repliée, à l'intérieur ou au voisinage des sièges arrière du véhicule.

De façon avantageuse, le dispositif comprend une traverse destinée à guider la ou les toiles de façon qu'elle(s) définisse(nt) sensiblement un angle droit.

Préférentiellement, la traverse porte lesdits montants, qui sont articulés sur cette dernière.

Selon un mode de mise en oeuvre avantageux, la traverse est articulée et/ou formée d'au moins deux éléments assemblables, de façon à réduire son encombrement dans une position pliée.

De façon préférentielle, les montants sont articulés par rapport au véhicule, de façon à pouvoir passer de la position sensiblement verticale à une position sensiblement horizontale.

L'invention concerne également les véhicules automobiles comprenant un tel dispositif coupe-vent.

Avantageusement, au moins une partie du dispositif coupe-vent est amovible, et le véhicule comprend un logement de stockage de celui-ci, dans une position pliée.

D'autres caractéristiques et avantages de l'invention apparaîtront plus clairement à la lecture de la description suivante d'un mode de réalisation préférentiel de l'invention, donnée à titre de simple exemple illustratif et non limitatif, et des dessins annexés parmi lesquels :
- la figure 1 illustre un premier mode de réalisation d'un coupe-vent selon l'invention, à deux toiles réunies dans une même cassette ;
- les figures 2A et 2B illustrent le déploiement de l'élément vertical du coupe-vent de la figure 1, respectivement :

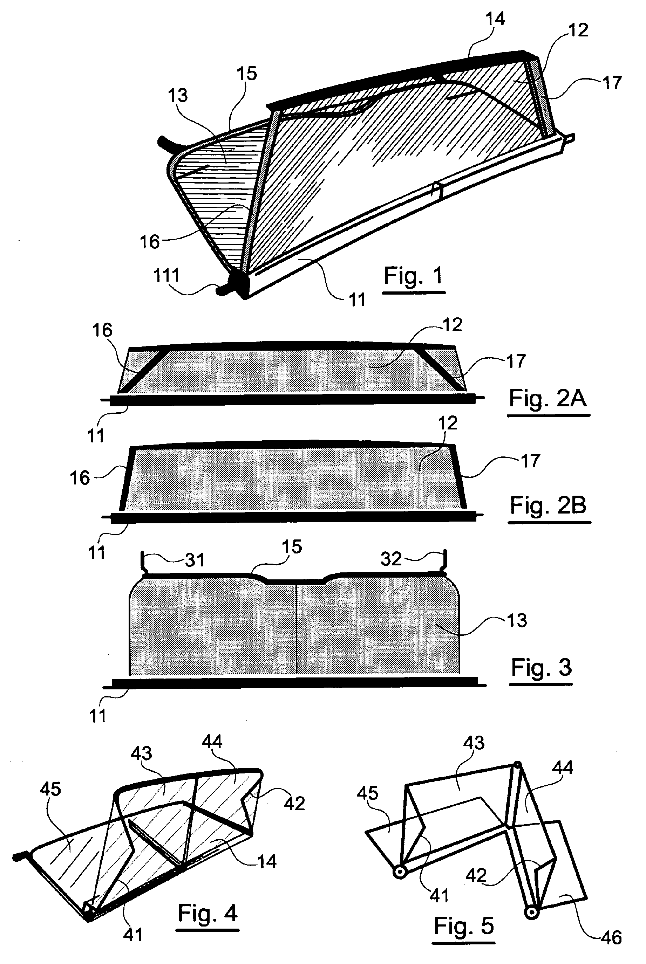

   - figure 2A : en cours de déploiement ;
   - figure 2B : déployé ;
- la figure 3 illustre l'élément horizontal du coupe-vent de la figure 1, en position déployée ;
- la figure 4 présente schématiquement une autre version du coupe-vent de la figure 1, à mécanisme d'entraînement à base de compas et à quatre toiles ;
- la figure 5 illustre l'aspect pliable du coupe-vent de la figure 4 ;

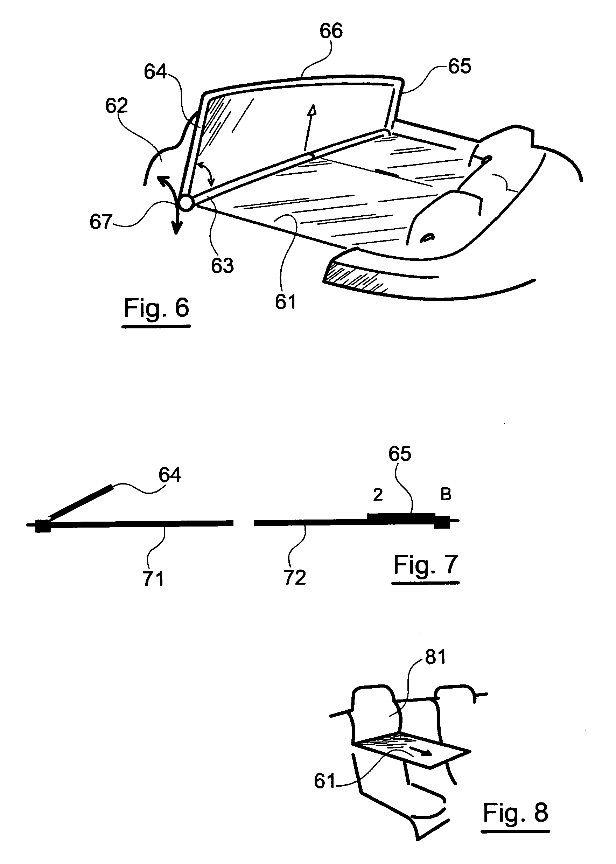

- la figure 6 présente un autre mode de réalisation d'un coupe-vent selon l'invention, utilisant une toile unique pour former l'élément vertical et l'élément horizontal ;
- la figure 7 illustre les sous-ensembles portant les montants du coupe-vent de la figure 6 ;
- la figure 8 illustre le déploiement de la toile du coupe-vent de la figure 6, intégrée aux sièges arrière.

L'invention repose donc sur la mise en oeuvre d'une ou plusieurs toiles coupe-vent monté sur un ou plusieurs tubes enrouleur. Selon l'invention, on prévoit des montants qui permettent le déploiement et le maintien d'une toile, au moins sensiblement verticalement, à l'arrière des sièges avant.

Ces montants sont amovibles et/ou mobiles, de façon à être escamotés et/ou escamotables lorsqu'ils ne sont pas utilisés. L'extrémité supérieure de ces montants est conçue de façon à recevoir et maintenir la barre de tirage, et donc maintenir la toile en position déployée. Selon une variante de l'invention, le montage de la toile peut être inversé, et c'est le tube enrouleur qui est placé à l'extrémité supérieure de ces montants.

Selon un mode de réalisation de l'invention, illustré par la figure 1, le dispositif coupe-vent comprend deux enrouleurs, regroupés dans une cassette 11. Cette cassette 11 est prévue pour s'étendre transversalement à l'arrière des sièges arrière du véhicule.

Avantageusement, cette cassette 11 est amovible et pliable, de façon à pouvoir être stocké par exemple dans le coffre du véhicule. Des moyens 111 de solidarisation au véhicule sont prévus. Ils viennent s'inscrire dans des logements prévus à cet effet dans le véhicule.

Une première toile 12 peut être déployée verticalement, au niveau de la partie supérieure des dossiers des sièges avant. Une seconde toile 13 peut être déployée horizontalement, pour recouvrir l'espace à l'arrière des sièges avant.

Le montage de ces deux toiles 12 et 13 sur les tubes enrouleurs n'est pas décrit ni illustré. Il est classique, et similaire à celui que l'on peut trouver classiquement sur les stores d'occultation de vitre, dans de nombreux véhicules automobiles. Le tube enrouleur est monté sur des paliers dans la cassette, et des moyens de rappel tendent à ramener les toiles dans leur position repliée. Des barres de tirage 14, 15 sont prévues, à l'extrémité libre de chacune des toiles 12, 13.

La barre de tirage 14 de la toile horizontale 12 est solidaire de deux montants mobiles 16 et 17, qui assurent le déploiement de la toile 12, en guidant puis en maintenant la barre de tirage 14. Le cas échéant, des montants supplémentaires peuvent être prévus, pour maintenir de façon plus forte la barre de tirage.

Le déploiement de la toile 12 est illustré par les figures 2A et 2B. Les montants 16 et 17 sont articulés par rapport à la cassette 11. L'extrémité de ces montants solidarisée à la barre de tirage 14 peut coulisser le long de cette barre de tirage, jusqu'à amener la toile 12 dans la position de la figure 2B.

Le déploiement de la toile 13 est illustré par la figure 3. La barre de tirage 15 a une forme adaptée au véhicule, par rapport aux dossiers des sièges arrière. Des moyens d'accrochage 31, 32 sont prévus pour maintenir la toile 13 déployés, par accrochage à des moyens complémentaires prévus à cet effet sur le véhicule.

La figure 4 présente une variante de mise en oeuvre de cette technique, selon laquelle les montants 16 et 17 sont remplacés par des montants articulés 41, 42, formant compas. On peut également prévoir d'autres types de montants, par exemple télescopiques.

De façon avantageuse, la cassette est constituée de deux portions de cassette, qui sont assemblées par une articulation centrale. En position de travail, les deux portions de cassette sont assemblées alignées. Au contraire, dans une position de rangement, les deux portions de cassette sont repliées l'une contre l'autre. Cela permet bien sûr de réduire l'encombrement en position pliée, et donc de faciliter le stockage du dispositif.

Pour faciliter le pliage, on peut également prévoir de remplacer chaque toile 12, 13 par deux (ou plus) toiles 43, 44 et 45, 46, de façon notamment à permettent un pliage du dispositif coupe-vent, comme illustré en figure 5.

Le déploiement de l'une et/ou de l'autre des toiles peut être manuel ou motorisé.

Dans une version simplifiée de l'invention, une seule toile verticale peut être prévue.

Selon une autre approche, une seule toile est prévue pour former l'élément vertical et l'élément horizontal. Bien sûr, deux toiles parallèles peuvent être prévues pour assurer cette fonction, selon le principe des figures 4 et 5.

Comme illustré en figure 6, la toile 61 est montée sur un enrouleur logé, par exemple à l'intérieur d'une cassette, au niveau des sièges arrière. La figure 8 illustre ainsi la toile 61, sortant de la cassette via une fente 82 prévue à cet effet.

Au voisinage des dossiers avant 62 est montée une traverse 63, s'étendant sur la largeur du véhicule, et solidarisée préférentiellement de façon amovible. La toile 61 est donc déployée horizontalement, puis passe sous cette traverse 63 et est redressée pour être déployée verticalement. La traverse 63 permet de former l'angle entre les éléments horizontal et vertical. Cette traverse, de même que la cassette, peut être pliable.

Deux montants 64 et 65 sont prévus, pour maintenir l'élément vertical. La barre de tirage 66 est ainsi solidarisée à l'extrémité supérieure de ces deux montants 64, 65.

Ces montants 64, 65 sont avantageusement articulés (flèche 67) pour permettre leur escamotage, et le cas échéant de replier l'élément vertical sur l'élément horizontal.

Ils sont préférentiellement solidaires de la traverse 63, notamment si celle-ci est amovible. Comme illustré en figure 7, la traverse 63 peut être formée de deux parties symétriques 71 et 72, que l'on assemble, avant de déployer les montants 64 et 65. Cette approche permet de réduire l'encombrement de l'ensemble amovible, et donc de faciliter son stockage.

De nombreuses variantes de ces techniques sont bien sûr envisageables, et de nombreuses adaptations ou options peuvent être envisagées.

Ainsi, les montants peuvent être solidarisés de façon définitive ou quasi-définitive au véhicule, de façon articulée, pour venir s'escamoter à l'intérieur de la carrosserie.

Des rails de guidage peuvent être prévus pour assurer le guidage de la toile (via la barre de tirage et le cas échéant de baleines). Des rails peuvent ainsi être formés dans la garniture du véhicule, pour la partie horizontale, et dans les montants pour la partie verticale.

La traverse 63 peut être remplacée par une baleine solidaire de la toile, qui vient s'immobiliser au voisinage des pieds des montants.

On peut également prévoir que la toile est tout d'abord déployée linéairement à partir des sièges arrière jusqu'à la partie supérieure des montants. On ramène ensuite un ou plusieurs éléments formant traverse (ou portions de traverse), par exemple sous la forme de deux éléments articulés sur chacun des montants.

Il est également possible de prévoir que la barre de tirage corresponde à cette traverse. Dans ce cas, la toile est déployée en double épaisseur, horizontalement à partir de sièges arrière, puis l'une des épaisseurs est basculée par l'intermédiaire des montants articulés.

Par ailleurs, il est possible d'inverser la position du ou des tubes enrouleurs et de la ou des barres de tirage. Ainsi, la cassette peut correspondre à la partie supérieure du dispositif. Les montants sont dépliés par rapport à cette cassette pour former un U, dont les deux branches viennent s'inscrire dans des logements prévus à cet effet sur le véhicule. La toile peut alors être déployée de haut en bas.

Bien sûr, ces différentes approches peuvent être complètement ou partiellement démontables, repliables, et des logements adaptés peuvent être prévus dans les véhicules, pour les stocker lorsqu'elles ne sont pas utilisées.

Enfin, ces dispositifs peuvent être motorisés, en tout ou en partie.

## Revendications

1. Dispositif coupe-vent pour véhicule automobile de type cabriolet, comprenant au moins un premier élément coupe-vent (12) susceptible de s'étendre sensiblement verticalement à l'arrière des sièges avant,
**caractérisé en ce qu**'il comprend une cassette (11) divisée en deux portions de cassette et portant une articulation centrale, de façon à pouvoir prendre au moins deux positions :
- une position de travail dans laquelle les deux portions de cassette sont alignées, et
- une position pliée, dans laquelle les deux portions de cassette sont ramenées l'une contre l'autre, de manière à réduire l'encombrement de ladite cassette (11),
chacune desdites portions de cassette portant au moins un tube enrouleur associé à au moins une toile (43, 44) dont l'extrémité libre est solidaire d'une barre de tirage (14).

2. Dispositif coupe-vent selon la revendication 1, **caractérisé en ce qu**'il comprend au moins deux montants (41, 42) mobiles et/ou amovibles, solidarisés ou solidarisables audit véhicule, s'étendant sensiblement verticalement à l'arrière des sièges avant dudit véhicule, dans une position de travail, et présentant en leur partie supérieure des moyens de maintien d'au moins une desdites barres de tirage (14) ou d'au moins un desdits tubes enrouleurs.

3. Dispositif coupe-vent selon la revendication 2, **caractérisé en ce qu'**il comprend au moins un second élément coupe-vent (13) susceptible de recouvrir sensiblement horizontalement une surface s'étendant à l'arrière des sièges avant dudit véhicule, et formé par au moins une toile (45, 46) montée sur un tube enrouleur.

4. Dispositif coupe-vent selon la revendication 3, **caractérisé en ce qu'**il comprend au moins une première toile (43, 44) montée sur un premier tube enrouleur, formant au moins une partie dudit premier élément coupe-vent (12), et au moins une seconde toile (45, 46) montée sur au moins un second tube enrouleur, formant au moins une partie dudit second élément coupe-vent (13).

5. Dispositif coupe-vent selon la revendication 4, **caractérisé en ce que** lesdits premier(s) et second(s) tubes enrouleurs sont regroupés dans une même cassette (11).

6. Dispositif coupe-vent selon l'une quelconque des revendications 2 à 5, **caractérisé en ce que** lesdits montants (41, 42) sont mobiles de façon à entraîner la ou lesdites barres de tirage (14) de façon à assurer le déploiement de la ou desdites premières toiles (43, 44).

7. Dispositif coupe-vent selon la revendication 6, **caractérisé en ce que** lesdits montants (41, 42) appartiennent au groupe comprenant :
- des montants télescopiques;
- des montants articulés ;
- des montants formant compas.

8. Dispositif coupe-vent selon l'une quelconque des revendications 2 à 7, **caractérisé en ce que** le déplacement desdits montants (41, 42) est motorisé.

9. Dispositif coupe-vent selon l'une quelconque des revendications 5 à 8, **caractérisé en ce que** lesdits montants (41, 42) peuvent se replier sensiblement parallèlement à ladite cassette (11).

10. Dispositif coupe-vent selon l'une quelconque des revendications 5 à 9, **caractérisé en ce que** ladite cassette (11) est amovible.

11. Dispositif coupe-vent selon la revendication 10, **caractérisé en ce que** ladite cassette (11) contient quatre tubes enrouleurs, et est articulée en son milieu, de façon à réduire son encombrement dans une position pliée.

12. Dispositif coupe-vent selon la revendication 3, **caractérisé en ce qu**'il comprend au moins une toile (61) pouvant s'étendre d'une part horizontalement pour former au moins une partie dudit second élément coupe-vent (13), et d'autre part verticalement pour former au moins une partie dudit premier élément coupe-vent (12).

13. Dispositif coupe-vent selon la revendication 12, **caractérisé en ce que** la ou lesdites toiles (61) sont montées chacune sur un tube enrouleur solidaire dudit véhicule.

14. Dispositif coupe-vent selon l'une quelconque des revendications I1 à 13, **caractérisé en ce qu**'il comprend une traverse (63) destinée à guider la ou lesdites toiles de façon qu'elle(s) définisse(nt) sensiblement un angle droit.

15. Dispositif coupe-vent selon la revendication 14, **caractérisé en ce que** ladite traverse (63) porte lesdits montants (64, 65), qui sont articulés sur cette dernière.

16. Dispositif coupe-vent selon l'une quelconque des revendications 14 et 15, **caractérisé en ce que** ladite traverse (63) est articulée et/ou formée d'au moins deux éléments assemblables (71, 72), de façon à réduire son encombrement dans une position pliée.

17. Dispositif coupe-vent selon l'une quelconque des revendications 2 à 16, **caractérisé en ce que** lesdits montants (16, 17, 64, 65) sont articulés par rapport audit véhicule, de façon à pouvoir passer de la position sensiblement verticale à une position sensiblement horizontale.

18. Véhicule automobile **caractérisé en ce qu**'il comprend un dispositif coupe-vent selon l'une quelconque des revendications 1 à 17.

19. Véhicule automobile selon la revendication 18, **caractérisé en ce qu**'il comprend un logement de stockage dudit dispositif coupe-vent, dans une position pliée.

## Claims

1. Windbreak device for a motor vehicle of the convertible type, comprising at least one first windbreak element (12) capable of extending substantially vertically at the rear of the front seats,
**characterised in that** it comprises a cassette (11) divided into two cassette portions and bearing a central articulation, so as to be able to assume at least two positions:
- a working position, in which the two cassette portions are aligned, and
- a folded position, in which the two cassette portions are brought back against one another, so as to reduce the bulkiness of the said cassette (11),
each of the said cassette portions bearing at least one winding tube associated with at least one cloth (43, 44), the free end of which is secured to a drawing bar (14).

2. Windbreak device according to Claim 1, **characterised in that** it comprises at least two movable and/or removable uprights (41, 42) secured or securable to the said vehicle, extending substantially vertically at the rear of the front seats of the said vehicle, in a working position, and having, at their upper part, means for holding at least one of the said drawing bars (14) or at least one of the said winding tubes.

3. Windbreak device according to Claim 2, **characterised in that** it comprises at least one second windbreak element (13) capable of covering substantially horizontally a surface extending at the rear of the front seats of the said vehicle, and formed by at least one cloth (45, 46) mounted on a winding tube.

4. Windbreak device according to Claim 3, **characterised in that** it comprises at least one first cloth (43, 44) mounted on a first winding tube, forming at least one part of the said first windbreak element (12), and at least one second cloth (45, 46) mounted on at least one second winding tube, forming at least one part of the said windbreak element (13).

5. Windbreak device according to Claim 4, **characterised in that** the said first and second winding tubes are grouped together in a same cassette (11).

6. Windbreak device according to any one of Claims 2 to 5, **characterised in that** the said uprights (41, 42) are movable so as to drive the said drawing bar(s) (14) so as to ensure the deployment of the said first cloth(s) (43, 44).

7. Windbreak device according to Claim 6, **characterised in that** the said uprights (41, 42) belong to the group comprising:
- telescopic uprights;
- articulated uprights;
- uprights forming torque links.

8. Windbreak device according to any one of Claims 2 to 7, **characterised in that** the movement of the said uprights (41, 42) is motor-driven.

9. Windbreak device according to any one of Claims 5 to 8, **characterised in that** the said uprights (41, 42) can fold back substantially parallel to the said cassette (11).

10. Windbreak device according to any one of Claims 5 to 9, **characterised in that** the said cassette (11) is removable.

11. Windbreak device according to Claim 10, **characterised in that** the said cassette (11) contains four winding tubes, and is articulated at its centre, so as to reduce its bulkiness in a folded position.

12. Windbreak device according to Claim 3, **characterised in that** it comprises at least one cloth (61) capable of extending, on the one hand, horizontally to form at least one part of the said second windbreak element (13), and, on the other hand, vertically to form at least one part of the said first windbreak element (12).

13. Windbreak device according to Claim 12, **characterised in that** the said cloth or cloths (61) are each mounted on a winding tube secured to the said vehicle.

14. Windbreak device according to any one of Claims 11 to 13, **characterised in that** it comprises a cross-member (63) intended to guide the said cloth or cloths so that it or they defines or define substantially a right angle.

15. Windbreak device according to Claim 14, **characterised in that** the said cross-member (63) bears the said uprights (64, 65), which are articulated thereon.

16. Windbreak device according to either one of Claims 14 and 15, **characterised in that** the said cross-member (63) is articulated and/or formed of at least two assemblable elements (71, 72), so as to reduce its bulkiness in a folded position.

17. Windbreak device according to any one of Claims 2 to 16, **characterised in that** the said uprights (16, 17, 64, 65) are articulated with respect to the said vehicle, so as to be able to move from the substantially vertical position to a substantially horizontal position.

18. Motor vehicle, **characterised in that** it comprises a windbreak device according to any one of Claims 1 to 17.

19. Motor vehicle according to Claim 18, **characterised in that** it comprises a receptacle for storing the said windbreak device in a folded position.

## Patentansprüche

1. Windschutzanordnung für Kraftfahrzeuge in Cabrio-Ausführung, die mindestens ein erstes Windschutzelement (12) umfasst, das hinter den Vordersitzen im Wesentlichen senkrecht nach oben ausfahren kann,
**dadurch gekennzeichnet, dass** es eine in zwei Kassettenteile unterteilte Kassette (11) mit einem mittigen Gelenk umfasst, um mindestens zwei Positionen einnehmen zu können:
- eine Arbeitsposition, in der die beiden Kassettenteile bündig sind, und
- eine eingeklappte Position, in der die beiden Kassettenteile gegeneinander angeordnet sind, so dass der Platzbedarf der Kassette (11) reduziert wird,
wobei jeder der Kassettenteile mindestens ein Aufwickelrohr umfasst, das mit mindestens einem Gewebe (43, 44) verbunden ist, dessen freies Ende an einem Zugstab (14) befestigt ist.

2. Windschutzanordnung nach Anspruch 1,
**dadurch gekennzeichnet, dass** sie mindestens zwei bewegliche und/oder abnehmbare Streben (41, 42) umfasst, die am Fahrzeug befestigt sind oder werden können, in der Arbeitsposition hinter den Rücksitzen des Fahrzeugs im Wesentlichen senkrecht nach oben ausfährt und im oberen Teil Haltemittel mit mindestens einem der Zugstäbe (14) oder mindestens einem der Aufwickelrohre aufweist.

3. Windschutzanordnung nach Anspruch 2,
**dadurch gekennzeichnet, dass** sie mindestens ein zweites Windschutzelement (13) umfasst, das im Wesentlichen waagrecht eine Fläche abdecken kann, die hinter die Vordersitze des Fahrzeugs reicht, und das durch mindestens ein an einem Aufwickelrohr montiertes Gewebe (45, 46) gebildet wird.

4. Windschutzanordnung nach Anspruch 3,
**dadurch gekennzeichnet, dass** sie mindestens ein erstes an einem ersten Aufwickelrohr montiertes Gewebe (43, 44), das mindestens einen Teil des ersten Windschutzelements (12) bildet, und mindestens ein an mindestens einem zweiten Aufwickelrohr montiertes zweites Gewebe (45, 46), das mindestens einen Teil des zweiten Windschutzelements (13) bildet, umfasst.

5. Windschutzanordnung nach Anspruch 4,
**dadurch gekennzeichnet, dass** erste(s) und zweite(s) Aufwickelrohr(e) in einer gleichen Kassette (11) angeordnet sind.

6. Windschutzanordnung nach einem der Ansprüche 2 bis 5,
**dadurch gekennzeichnet, dass** die Streben (41, 42) beweglich sind, so dass sie den Zugstab bzw. die Zugstäbe (14) so bewegen, dass das Entfalten des ersten Gewebes bzw. der ersten Gewebe (43, 44) gewährleistet ist.

7. Windschutzanordnung nach Anspruch 6,
**dadurch gekennzeichnet, dass** die Streben (41, 42) Bestandteil einer Gruppe mit folgenden Elementen sind:
- Teleskopstreben
- Gelenkstreben
- Streben in Zirkelform

8. Windschutzanordnung nach einem der Ansprüche 2 bis 7,
**dadurch gekennzeichnet, dass** das Bewegen der Streben (41, 42) mit einem Motor erfolgt.

9. Windschutzanordnung nach einem der Ansprüche 5 bis 8,
**dadurch gekennzeichnet, dass** die Streben (41, 42) im Wesentlichen parallel zur Kassette (11) einklappen können.

10. Windschutzanordnung nach einem der Ansprüche 5 bis 9,
**dadurch gekennzeichnet, dass** die Kassette (11) abnehmbar ist.

11. Windschutzanordnung nach Anspruch 10,
**dadurch gekennzeichnet, dass** die Kassette (11) vier Aufwickelrohre umfasst und in der Mitte ein Gelenk aufweist, um in eingeklappter Position weniger Platz einzunehmen.

12. Windschutzanordnung nach Anspruch 3,
**dadurch gekennzeichnet, dass** sie mindestens ein Gewebe (61) umfasst, das sich waagrecht ausfalten kann, um mindestens einen Teil des zweiten Windschutzelements (13) zu bilden, und senkrecht ausfalten kann, um mindestens einen Teil des ersten Windschutzelements (12) zu bilden.

13. Windschutzanordnung nach Anspruch 12,
**dadurch gekennzeichnet, dass** das Gewebe bzw. die Gewebe (61) jeweils an einem mit dem Fahrzeug verbundenen Aufwickelrohr montiert sind.

14. Windschutzanordnung nach einem der Ansprüche 11 bis 13,
**dadurch gekennzeichnet, dass** sie eine Querstrebe (63) umfasst, die zum Führen des Gewebes bzw. der Gewebe dienen, so dass diese(s) im Wesentlichen einen rechten Winkel bildet/bilden.

15. Windschutzanordnung nach Anspruch 14,
**dadurch gekennzeichnet, dass** die Querstrebe (63) die Streben (64, 65) trägt, die mit dieser gelenkig verbunden sind.

16. Windschutzanordnung nach einem der Ansprüche 14 und 15,
**dadurch gekennzeichnet, dass** die Querstrebe (63) ein Gelenk aufweist und/oder aus mindestens zwei ähnlichen Elementen (71, 72) gebildet wird, um den Platzbedarf in einer eingeklappten Position zu reduzieren.

17. Windschutzanordnung nach einem der Ansprüche 2 bis 16,
**dadurch gekennzeichnet, dass** die Streben (16, 17, 64, 65) mit dem Fahrzeug gelenkig verbunden sind, um diese aus der im Wesentlichen senkrechten Position in eine im Wesentlichen waagrechte Position bringen zu können.

18. Kraftfahrzeug,
**dadurch gekennzeichnet, dass** es eine Windschutzanordnung nach einem der Ansprüche 1 bis 17 umfasst.

19. Kraftfahrzeug nach Anspruch 18,
**dadurch gekennzeichnet, dass** es einen Stauraum für die Windschutzanordnung in einer eingeklappten Position aufweist.
